Europäisches Patentamt

European Patent Office

Office européen des brevets

(19)

(11) Veröffentlichungsnummer : **0 520 333 B1**

(12) **EUROPÄISCHE PATENTSCHRIFT**

(45) Veröffentlichungstag der Patentschrift :
**04.10.95 Patentblatt 95/40**

(51) Int. Cl.$^6$ : **H02K 17/30,** F04D 29/58,
F04D 13/06

(21) Anmeldenummer : **92110380.0**

(22) Anmeldetag : **19.06.92**

(54) **Pumpenaggregat.**

(30) Priorität : **28.06.91 DE 4121430**

(43) Veröffentlichungstag der Anmeldung :
**30.12.92 Patentblatt 92/53**

(45) Bekanntmachung des Hinweises auf die
Patenterteilung :
**04.10.95 Patentblatt 95/40**

(84) Benannte Vertragsstaaten :
**DE FR GB IT**

(56) Entgegenhaltungen :
**DE-C- 3 738 592**
**FR-A- 2 082 048**
**FR-A- 2 608 332**
**GB-A- 2 199 081**

(73) Patentinhaber : **GRUNDFOS A/S**
**Poul Due Jensens Vej 7-11**
**DK-8850 Bjerringbro (DK)**

(72) Erfinder : **Jensen, Niels Due**
**Pilevej 1**
**DK-8850 Bjerringbro (DK)**

(74) Vertreter : **Vollmann, Heiko, Dipl.-Ing. et al**
**Patentanwälte Wilcken & Vollmann,**
**Musterbahn 1**
**D-23552 Lübeck (DE)**

## Beschreibung

Die Erfindung betrifft ein Pumpenaggregat, insbesondere für Wärmeerzeugungs- und Wärmeverteilungsanlagen, mit einem von der Förderflüssigkeit gekühlten Elektromotor mit gegenüber der Förderflüssigkeit abgedichtetem Rotor, mit einer vom Elektromotor angetriebenen Kreiselpumpe und mit einem Frequenzumrichter zur Drehzahlsteuerung des Aggregats, wobei die zur Kühlung abgezweigte Förderflussigkeit einen Kühlmantel durchströmt, der den Motor umfangseitig umschließt.

Die bekannten Modellgesetze der Kreiselpumpe weisen aus, daß der Förderstrom proportional zur Drehzahl, die Förderhöhe mit dem Quadrat der Drehzahl und die Pumpenleistung mit der dritten Potenz der Drehzahl wächst. Aus diesen Gesetzmässigkeiten ergibt sich das Streben, Kreiselpumpen mit möglichst hoher Drehzahl anzutreiben. Weiterhin kann dadurch, daß ein Aggregat mit unterschiedlicher Drehzahl betrieben wird, mit nur einem Aggregat eine ganze Typenreihe abgedeckt werden, ohne konstruktive Änderungen vorzusehen. Hieraus ergibt sich auch, daß durch entsprechende Wahl und Regelung der gewählten Drehzahl eine Pumpenanlage besonders energiesparend betrieben werden kann.

Die Steuerung der Drehzahl erfolgt bei Pumpenaggregaten der oben angegebenen Art durch einen Frequenzumrichter. Der Frequenzumrichter ist daher ein ganz entscheidendes Bauelement eines solchen Pumpenaggregats, um die sich aus den vorgenannten Gesetzmäßigkeiten ergebenden Vorteile überhaupt erreichen zu können.

Aufgrund der Entwicklung auf dem Gebiet der Elektronik ist es heute möglich, Frequenzumrichter mit so geringen Abmessungen zu bauen, daß sie im Pumpenaggregat integriert werden können. Ein solches Pumpenaggregat mit integriertem Frequenzumrichter ist beispielsweise aus der DE 36.42 727 A1 bekannt. Diese Druckschrift beschreibt eine Unterwassermotorpumpe mit eingebautem Frequenzumrichter. Der Motor dieser Pumpe ist als Naßlaufmotor ausgelegt, d.h., der Rotor läuft in einem von Förderflüssigkeit durchspülten Spaltrohrtopf. Durch diese im Spaltrohrtopf strömende Förderflüssigkeit wird sowohl der Motor als auch der Frequenzumrichter gekühlt. Nachteilig bei derartigen Naßlaufmotoren sind jedoch die großen Scherreibungsverluste des Rotors innerhalb des flüssigkeitsgefüllten Spaltrohrs. Hierdurch wird der Wirkungsgrad des Aggregats, insbesondere bei höheren Drehzahlen drastisch vermindert.

Beispielsweise aus der Schwimmbadtechnik sind Pumpenaggregate bekannt, deren Elektromotor einen gegenüber der Förderflüssigkeit abgedichteten Rotor und somit im Vergleich zum Naßläufer deutlich geringere Reibungsverluste aufweist. Der Motor wird dabei über einen Kühlmantel am Außenumfang des Stators gekühlt, der von einem Teilstrom der Förderflüssigkeit durchströmt wird. Ein Motor für ein solches Pumpenaggregat ist beispielsweise aus der DE 37 38 592 C1 bekannt. Werden solche Motoren frequenzumrichtergesteuert, so ist für den Frequenzumrichter regelmäßig eine spezielle Kühlung erforderlich. Im Falle der Kühlung des Frequenzumrichters mittels Luft sind großdimensionierte Konvektionskühlkörper erforderlich, die das Pumpenaggregat erheblich vergrößern. Im Falle von Flüssigkeitskühlung sind zwar keine platzaufwendigen Kühlkörper erforderlich, doch muß das Kühlmedium, in der Regel die Förderflüssigkeit, über Leitungen zum Frequenzumrichter geführt und wieder abgeführt werden (siehe FR-A- 2 608 332). Dies erfordert einen hohen Bauaufwand.

Ausgehend von diesem Stand der Technik liegt der Erfindung die Aufgabe zugrunde, ein gattungsgemäßes Pumpenaggregat so auszubilden, daß die vorgenannten Nachteile vermieden werden, daß mit konstruktiv einfachen Mitteln eine geringe Baugröße erreicht wird und daß die Verlustwärme der elektrischen Aggregate möglichst vollständig auf den Förderstrom übertragen wird.

Diese Aufgabe wird gemäß der Erfindung dadurch gelöst, daß der Frequenzumrichter an der Außenseite des Kühlmantels angeordnet und mit diesem wärmeleitend verbunden und zusammen mit dem Motor in einem gemeinsamen Gehäuse angeordnet ist.

Die Erfindung verbindet in nahezu idealer Weise die Vorteile der vorbeschriebenen Pumpenaggregate mit Naßlaufmotor mit denen mit Trockenläufer, d.h. mit Pumpen, bei denen der Rotorraum gegenüber der Förderflüssigkeit abgedichtet ist und die bevorzugt mit hohen Drehzahlen angetrieben werden. Das erfindungsgemäße Pumpenaggregat weist einen vergleichsweise höheren Wirkungsgrad auf, d.h. es ist im Vergleich zu bekannten Pumpenaggregaten energiesparender. Die Baugröße des erfindungsgemäßen Pumpenaggregates ist sehr kompakt bei vergleichsweise günstigen Herstellungskosten. Eine weitere Wirkungsgradsteigerung wird beim Einsatz des erfindungsgemäßen Pumpenaggregats in Wärmeerzeugungs- und Wärmeverteilungsanlagen dadurch erreicht, daß nahezu die gesamte Verlustwärme des Elektromotors und des Frequenzumrichters dem Fördermedium zugeführt werden, d.h. aus den Verlusten von Motor und Frequenzumrichter Heizenergie gewonnen wird.

Bei solchen in Wärmeerzeugungs- und Wärmeverteilungsanlagen eingesetzten Pumpen ist nicht der sonst übliche hydraulische Wirkungsgrad $\eta$ maßgebend, sondern der thermodynamisch-wirtschaftliche Wirkungsgrad $\eta_t$. Unter hydraulischem Wirkungsgrad $\eta$ versteht man den Quotienten aus Förderleistung und elek-

trischer Leistung.

$$\eta = \frac{P_Q}{P_{e1}} = \frac{Q \cdot H \cdot \rho \cdot g}{P_{e1}}$$

(Q - Förderstrom, H - Förderhöhe, $\rho$ - Dichte des Fördermediums, g - Erdbeschleunigung)

Der thermodynamisch-wirtschaftliche Wirkungsgrad $\eta_t$ ergibt sich wie folgt:

$$\eta_t = \frac{P_Q}{P_{e1}} + \frac{P_{e1} - P_Q}{P_{e1}} \cdot \frac{a}{b}$$

Dieser Wirkungsgrad ($\eta_t$) schließt auch die Verluste $P_{e1}$ - $P_Q$ mit in die Betrachtung ein und bewertet diese mit den Gestehungskosten der Energieeinheiten. Der Faktor a steht für die Gestehungskosten einer Energieeinheit aus Brennstoffen, der Faktor b für die Kosten der gleichen Energieeinheit aus elektrischem Strom. Da der Faktor b, der die Wärmeenergieerzeugung über den elektrischen Strom beinhaltet, immer größer ist als der Faktor a, wird der Quotient aus a und b stets kleiner als eins sein. Demnach ist $\eta_t$ stets größer als $\eta$. Bei Heizungsanlagen, Pumpen für medizinische Bäder, Whirl-Pool-Pumpen und dergleichen kann somit der thermodynamisch-wirtschaftliche Wirkungsgrad des Pumpenaggregats durch die erfindungsgemäße Ausbildung erheblich gesteigert werden.

Aber auch in anderen Fällen des Pumpeneinsatzes, bei denen eine Erwärmung des Fördermediums durch die elektrische Verlustwärme des Motors und des Frequenzumrichters keine Vorteile bringt, besteht der erhebliche Vorteil eines im Vergleich zum Stand der Technik kleineren und damit kostengünstigeren Motors dieses Pumpenaggregats, da die Reibungsverluste des Naßlaufmotors vermieden werden und die Pumpe mit hohen Drehzahlen betrieben werden kann.

Fertigungstechnisch besonders günstig ist es, wenn der Kühlmantel aus tiefgezogenen und miteinander verschweißten Chromnickelstahlblechen hergestellt ist, die unter Ausbildung eines pumpenseitigen Flansches geformt und miteinander verbunden sind.

Einen guten Wärmeübergang zwischen Motor und Kühlmantel erreicht man dadurch, daß der Kühlmantel an seiner Innenseite zylindrisch zur Aufnahme des Statorblechpakets des Motors ausgebildet ist. Das Statorblechpaket kann in die Zylinderinnenwand des Kühlmantels eingepreßt sein, wodurch ein guter Wärmeübergang und mechanischer Verbund erreicht wird.

Um einen guten Wärmeübergang von den Verlustwärme erzeugenden Bauteilen des Frequenzumrichters zum Kühlmantel zu erzielen, ist es vorteilhaft, den Frequenzumrichter über einen Wärmeverteiler wärmeleitend an den Kühlmantel anzuschließen. Ein solcher Wärmeverteiler wird bevorzugt form- und kraftschlüssig am Außenumfang des Kühlmantels angebracht. Auf diese Weise kann der Freqzenzumrichter mit dem Wärmeverteiler als Baueinheit hergestellt und bei der Montage des Pumpenaggregats in einfacher Weise auf dem Kühlmantel befestigt werden.

Der Kühlmantel weist an seinem pumpenseitigen Ende zweckmäßigerweise einen Flansch auf, mit dem er zwischen Motorgehäuse und Pumpengehäuse eingespannt werden kann. Auf diese Weise ergibt sich eine sehr einfache und zugleich stabile Befestigung des Kühlmantels innerhalb des Motorgehäuses.

Das Motorgehäuse besteht bevorzugt aus einem kappenförmigen Teil sowie einem flanschartigen Teil, wobei sich das kappenförmige Teil an eine Stirnseite des flanschartigen Teils und das Pumpengehäuse an das andere stirnseitige Ende des flanschartigen Teils anschließt. Der Kühlmantel ist dann zwischen dem flanschartigen Teil und dem Pumpengehäuse eingespannt. Bei dieser Ausbildung kann das kappenförmige Teil des Motorgehäuses ohne Einfluß auf das übrige Pumpenaggregat montiert bzw. demontiert werden, so daß der Frequenzumrichter ohne weitere Demontage des Aggregats zugänglich ist.

Bevorzugt sind Ein- und Auslaßöffnungen für die den Kühlmantel durchströmende Förderflüssigkeit an der zur Pumpe gerichteten Stirnseite des Kühlmantels angeordnet. Hierdurch kann eine schraubenlinienförmige Durchströmung des Kühlmantels erreicht werden, wodurch eine genügende Verweildauer des Fördermediums innerhalb des Kühlmantels gewährleistet wird und somit die den Kühlmantel durchströmende Flüssigkeitsmenge und die damit verbundene hydraulische Verlustleistung gesenkt werden kann. Im übrigen gibt es bei dieser Ausbildung keine Dichtungsprobleme und keine flüssigkeitsführenden Anschlüsse im Bereich des Motors bzw. des Motorgehäuses. Schließlich sorgt eine schraubenlinienförmige Durchströmung des Kühlmantels für eine schnelle und zuverlässige Abfuhr von im Kühlmantel befindlichem Gas, das die Kühlung stören könnte.

Zur Überwachung der Kühlfunktion ist es regelmäßig angebracht, eine Temperaturmeßeinrichtung vorzusehen. Über eine entsprechende Sicherheitssteuerung kann mit Hilfe einer solchen Temperaturmeßeinrichtung eine thermische Überlastung des Aggregats verhindert werden. Bei der erfindungsgemäßen Konstruktion ist es von Vorteil, diese Temperaturmeßeinrichtung, insbesondere den Meßfühler dieser Einrichtung, an der Außenseite des Kühlmantels oder des Wärmeverteilers anzuordnen. Diese Anordnung berücksichtigt die Erwärmung in Abhängigkeit der Kühlung, d.h., die Meßeinrichtung erfaßt sowohl eine übermäßige Erwärmung des Frequenzumrichters durch elektrische Überlastung, beispielsweise bei Defekt von Bauelementen, als auch einen Ausfall des Kühlmittelstroms durch den Kühlmantel.

Die Erfindung ist nachfolgend anhand einer in den Zeichnungen dargestellten Whirl-Pool-Pumpe beschrieben. Es zeigen:

Figur 1    einen Längsschnitt durch ein Pumpenaggregat in stark vereinfachter Darstellung und

Figur 2    eine Ansicht in Richtung des Pfeils II in Figur 1 nach Entfernen der Motorgehäusekappe.

Bei dem dargestellten Pumpenaggregat handelt es sich um eine Whirl-Pool-Pumpe. Das Pumpengehäuse 1 weist einen Einlaßstutzen 2 sowie einen Auslaßstutzen 3 auf. Zwischen Ein- und Auslaßstutzen 2,3 befindet sich ein Kreiselrad 4, das bei Rotation in bekannter Weise einen Förderstrom erzeugt.

Das Kreiselrad 4 sitzt innerhalb des Pumpengehäuses 1 auf einem Ende einer Welle 5, die den Rotor 6 eines Elektromotors 7 trägt. Die Welle 5 ist gegenüber dem Pumpengehäuse 1 abgedichtet und am motorseitigen Ende in einem Lager 8 sowie nahe dem pumpenseitigen Ende in einem Lager 9 gelagert.

Der Rotor 6 des Elektromotors 7 ist somit ebenfalls über die Lager 8,9 gelagert und rotiert innerhalb eines Stators 10, dessen zylindrischer Außenumfang (Statorblechpaket) innerhalb eines Kühlmantels 11 sitzt. Die innerhalb des Stators 10 verlaufende Motorwicklung ist mit 12 gekennzeichnet.

Der Kühlmantel 11 besteht aus einem zylindrischen, topfförmigen Teil 13, das an seinem offenen Ende hin zu einem stufenförmigen Flansch ausgebildet ist. Dieser topfförmige Teil 13 wird umfangseitig von einem ringförmigen, sich vom topfförmigen Teil 13 erhebenden Teil 14 umgeben, welches zum offenen Ende des topfförmigen Teils 13 erweiternd ebenfalls in einen Flansch ausläuft. Die Flansche der Teile 13 und 14 sind zu einem gemeinsamen Flansch 15 dicht, beispielsweise durch Schweißen, miteinander verbunden.

Zwischen den Teilen 13 und 14 des Kühlmantels 11 ist ein Ringraum gebildet, der zwei, etwa diametral angeordnete (nicht dargestellte) Öffnungen zum Pumpengehäuse 1 hin aufweist, die jeweils eine Verbindung zum Förderstrom der Pumpe bilden, wobei diese Öffnungen in Bereichen unterschiedlichen Druckniveaus der Pumpe liegen, so daß bei Förderung der Pumpe ein Teil des Förderstroms als Kühlstrom durch den Kühlmantel 11 gelangt.

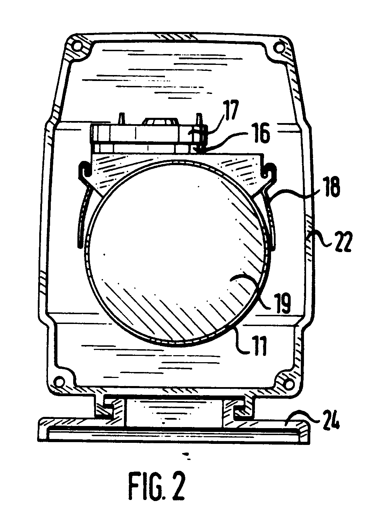

An der ebenfalls zylindrischen Außenseite des Kühlmantels 11 (insbesondere des ringförmigen Teiles 14) ist über einen Wärmeverteiler 16 ein Frequenzumrichter 17 wärmeleitend mit dem Kühlmantel 11 verbunden. Der Frequenzumrichter 17 mit seinen Verlustwärme erzeugenden elektronischen Bauelementen ist in an sich bekannter Weise so angeordnet und ausgebildet, daß die Verlustwärme über den Wärmeverteiler 16 zum Kühlmantel 11 geleitet wird. Wärmeverteiler 16 und Frequenzumrichter 17 sind als Baueinheit ausgebildet und form- und kraftschlüssig am Außenumfang des Kühlmantels 11 angebracht. Dies kann beispielsweise über die in Figur 2 mit 18 angedeuteten Federzungen erfolgen, die entweder um die Unterseite des Kühlmantels 11 umlaufend ausgebildet oder seitlich an diesem angeschweißt sind. Diese Federzungen 18 rasten form- und kraftschlüssig hinter entsprechenden Vorsprüngen an den Längsseiten des Wärmeverteilers 16 ein und drücken diesen zum Kühlmantel 11 hin. Derartige Verbindungen sind hinreichend bekannt.

Am Boden des topfförmigen Teils 13 ist an der Innenseite eine Aufnahme 20 für das Lager 8 vorgesehen. Nahe dem offenen Ende des Kühlmantels 11 ist innerhalb des topfförmigen Teils 13 eine ringförmige, aus Blech geformte Lageraufnahme 21 eingelassen, die im wesentlichen scheibenförmig ausgebildet ist und einen umfangseitigen Kragen zum Anschluß an den topfförmigen Teil 13 sowie eine mittige Einformung zur Aufnahme des Lagers 9 aufweist. Zur Durchführung der Welle 5 ist diese scheibenförmige Lageraufnahme 11 mittig durchbrochen.

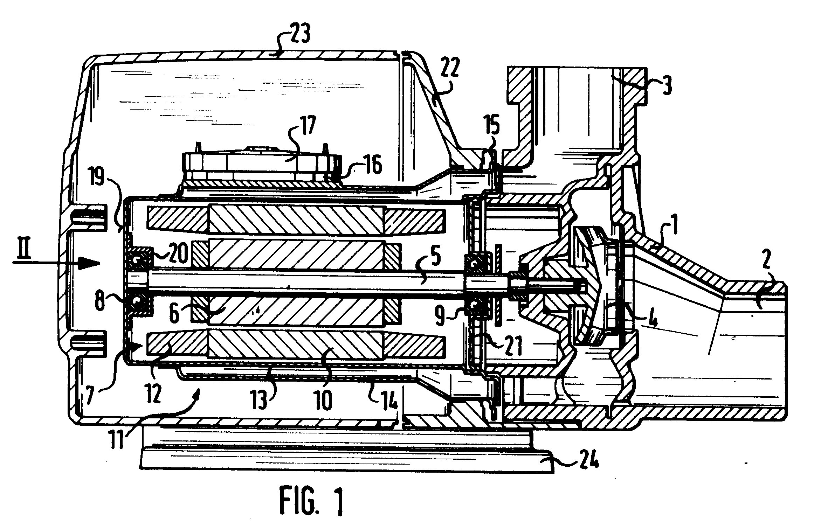

Der Kühlmantel 11 nimmt innenseitig den Motor 7, außenseitig sitzt der Frequenzumrichter 17. Zur Pumpe hin ist der Kühlmantel 11 durch einen inneren Teil des Pumpengehäuses 1 abgestützt, wie sich aus Figur 1 ergibt. Gehalten wird der Kühlmantel 11 sowie die davon getragenen Aggregatteile an dem Flansch 15, der zwischen dem Pumpengehäuse 1 und einem flanschartigen Gehäuseteil 22 eingespannt ist. Das flanschartige Gehäuseteil 22 liegt nicht nur stirnseitig an dem Flansch 15 des Kühlmantels 11 an, sondern führt diesen im Bereich vor dem Flansch 15 auch radial. An diesen rohrförmigen Teil des flanschartigen Gehäuseteils 22 schließt sich in Richtung zum Motor hin ein schräg aufgeweitetes Flanschteil an, das stirnseitig zur Verbindung mit einer das Gehäuse nach hinten dichtend abschließenden Gehäusekappe 23 vorgesehen ist. Die Gehäusekappe 23 ist, wie in Figur 1 dargestellt, etwa topfartig ausgebildet und umschließt nahezu den gesamten Kühlmantel 11 sowie den darauf sitzenden Wärmeverteiler 16 mit Frequenzumrichter 17 mit Abstand.

An der Unterseite des Motorengehäuses 22, 23 ist ein Fuß 24 angeordnet, der in Achsrichtung des Aggregates verschiebbar ist.

Innerhalb des Wärmeverteilers 16 ist eine Temperaturmeßeinrichtung zur Überwachung der Kühlleistung angeordnet. Diese, in der Zeichnung nicht dargestellte Temperaturmeßeinrichtung kann auch an der Außenseite des Kühlmantels 11 angebracht sein.

## Patentansprüche

1. Pumpenaggregat, insbesondere für Wärmeerzeugungs- und Wärmeverteilungsanlagen, mit einem von der Förderflüssigkeit gekühlten Elektromotor (7) mit gegenüber der Förderflüssigkeit abgedichtetem Rotor (6), mit einer vom Elektromotor angetriebenen Kreiselpumpe und mit einem Frequenzumrichter (17) zur Drehzahlsteuerung des Aggregats, wobei die zur Kühlung abgezweigte Förderflüssigkeit einen Kühlmantel (11) durchströmt, der den Motor umfangseitig umschließt, dadurch gekennzeichnet, daß der Frequenzumrichter (17) mit der Außenseite des Kühlmantels (11) wärmeleitend verbunden und zusammen mit dem Motor (7) in einem gemeinsamen Gehäuse (1, 22, 23) angeordnet ist.

2. Pumpenaggregat nach Anspruch 1, dadurch gekennzeichnet, daß der Kühlmantel (11) aus tiefgezogenen und miteinander verschweißten Chromnickelstahlblechen (13, 14) unter Ausbildung eines pumpenseitigen Flansches (15) hergestellt ist.

3. Pumpenaggregat nach einem der vorhergehenden Ansprüche, dadurch gekennzeichnet, daß der Kühlmantel (11) einen zylindrischen Ringraum (13) aufweist, an dessen Innenseite das Statorblechpaket (10) des Motors (7) anliegt.

4. Pumpenaggregat nach einem der vorhergehenden Ansprüche, dadurch gekennzeichnet, daß die Verlustwärme erzeugenden Bauteile des Frequenzumrichters (17) über einen Wärmeverteiler (16) wärmeleitend an den Kühlmantel (11) angeschlossen sind.

5. Pumpenaggregat nach einem der vorhergehenden Ansprüche, dadurch gekennzeichnet, daß der Wärmeverteiler (16) form- und kraftschlüssig am Außenumfang des Kühlmantels (11) gehaltert ist.

6. Pumpenaggregat nach einem der vorhergehenden Ansprüche, dadurch gekennzeichnet, daß der Kühlmantel (11) einen endseitigen Flansch (15) aufweist, mit dem er zwischen Motorgehäuse (22, 23) und Pumpengehäuse (1) eingespannt ist.

7. Pumpenaggregat nach einem der vorhergehenden Ansprüche, dadurch gekennzeichnet, daß das Motorgehäuse (22, 23) einen flanschartigen Teil (22) aufweist, an dessen einer Stirnseite der Kühlmantel (11) mit dem Pumpengehäuse (1) und an dessen anderer Stirnseite der übrige, vorzugsweise kappenförmig ausgebildete Teil (23) des Motorgehäuses anschließt.

8. Pumpenaggregat nach einem der vorhergehenden Ansprüche, dadurch gekennzeichnet, daß der Kühlmantel (11) an seiner zur Pumpe gerichteten Stirnseite mindestens eine Einlaß- und eine Auslaßöffnung für die den Kühlmantel (11) durchströmende Förderflüssigkeit aufweist.

9. Pumpenaggregat nach einem der vorhergehenden Ansprüche, dadurch gekennzeichnet, daß an der Außenseite des Kühlmantels (11) oder des Wärmeverteilers (16) eine Temperaturmeßeinrichtung zur Überwachung der Kühlleistung angeordnet ist.

## Claims

1. Pump unit, in particular for heat-producing and heat-distributing plants, having an electromotor (7) cooled by the conveying liquid and rotor (6) sealed with respect to the conveying liquid, having a centrifugal pump driven by the electromotor and having a frequency converter (17) for controlling the speed of the unit, wherein the conveying liquid branched off for cooling flows through a cooling jacket (11) surrounding the motor peripherally, characterised in that the frequency converter (17) is connected in heat-conducting manner to the outer side of the cooling jacket (11) and is arranged in a common housing (1, 22, 23) together with motor (7).

2. Pump unit according to claim 1, characterised in that the cooling jacket (11) is produced from deep-drawn chromium-nickel steel sheets (13, 14) welded to one another while forming a flange (15) on the pump side.

3. Pump unit according to one of the preceding claims, characterised in that the cooling jacket (11) has a cylindrical annular space (13), against the inner side of which rests the stator sheet stack (10) of motor (7).

4. Pump unit according to one of the preceding claims, characterised in that the components of frequency converter (17) producing heat losses are connected in heat-conducting manner to cooling jacket (11) via a heat distributer (16).

5. Pump unit according to one of the preceding claims, characterised in that the heat distributer (16) is mounted positively and non-positively on the outer periphery of cooling jacket (11).

6. Pump unit according to one of the preceding claims, characterised in that the cooling jacket (11) has an end-side flange (15), by means of which it is clamped between motor housing (22, 23) and pump housing (1).

7. Pump unit according to one of the preceding claims, characterised in that the motor housing (22, 23) has a flange-like part (22), on one end-face of which the cooling jacket (11) is connected to the pump housing (1) and on the other end-face of which the remaining, preferably cap-shaped part (23) of the motor housing is connected.

8. Pump unit according to one of the preceding claims, characterised in that the cooling jacket (11) has at least one inlet opening and one outlet opening for the conveying liquid flowing through cooling jacket (11) on its end-face directed towards the pump.

9. Pump unit according to one of the preceding claims, characterised in that a temperature-measuring device is arranged on the outer side of cooling jacket (11) or heat distributer (16) to monitor the refrigerating capacity.

**Revendications**

1. Unité de pompage, notamment pour installations de production et de dissipation de chaleur, comportant un moteur électrique (7) refroidi par le liquide de transfert et comportant un rotor (6) étanchéifié vis-à-vis du liquide de transfert, une pompe centrifuge entraînée par le moteur électrique, et un convertisseur de fréquence (17) servant à commander la vitesse de rotation de l'unité, le liquide de transfert dérivé pour le refroidissement traversant une chemise de refroidissement (11), qui entoure le moteur sur son pourtour, caractérisée en ce que le convertisseur de fréquence (17) est relié, d'une manière thermoconductrice, à la face extérieure de la chemise de refroidissement (11) et est disposé, conjointement avec le moteur (7), dans un carter commun (1,22,23).

2. Unité de pompage selon la revendication 1, caractérisée en ce que la chemise de refroidissement (11) est réalisée à partir de tôles en acier au chrome et au nickel (13,14), embouties et réunies par soudage, moyennant la formation d'une bride (15) située du côté de la pompe.

3. Unité de pompage selon l'une des revendications précédentes, caractérisée en ce que la chemise de refroidissement (11) comporte une chambre annulaire cylindrique (13), contre la face intérieure de laquelle s'applique le paquet (10) de tôles statoriques du moteur (7).

4. Unité de pompage selon l'une des revendications précédentes, caractérisée en ce que les composants, qui dégagent de la chaleur, du convertisseur de fréquence (17) sont raccordés, d'une manière thermoconductrice, à la chemise de refroidissement (11) par l'intermédiaire d'un dissipateur de chaleur (16).

5. Unité de pompage selon l'une des revendications précédentes, caractérisée en ce que le dissipateur de chaleur (16) est retenu selon une liaison par formes complémentaires et par adhérence sur le pourtour extérieur de la chemise de refroidissement (11).

6. Unité de pompage selon l'une des revendications précédentes, caractérisée en ce que la chemise de refroidissement (11) possède une bride d'extrémité (15), par laquelle elle est serrée entre le carter (22,23) du moteur et le carter (1) de la pompe.

7. Unité de pompage selon l'une des revendications précédentes, caractérisée en ce que le carter (22,23) du moteur comporte une partie en forme de bride (22), sur une face frontale de laquelle se raccordent la chemise de refroidissement (11) et le carter (1) de la pompe et sur l'autre face frontale de laquelle se raccorde la partie complémentaire (23) réalisée de préférence sous la forme d'un capot, du carter du moteur.

8. Unité de pompage selon l'une des revendications précédentes, caractérisée en ce que la chemise de refroidissement (11) possède, sur sa face frontale tournée vers la pompe, au moins une ouverture d'admission et une ouverture de sortie pour le liquide de transfert qui traverse la chemise de refroidissement (11).

9. Unité de pompage selon l'une des revendications précédentes, caractérisée en ce qu'un dispositif de, mesure de température, servant à contrôler la capacité de refroidissement, est disposé sur la face extérieure de la chemise de refroidissement (11) ou du dissipateur de chaleur (16).

**FIG. 1**

EP 0 520 333 B1

FIG. 2